# EUROPÄISCHE PATENTSCHRIFT

(11) **EP 0 607 847 B1**
(45) Veröffentlichungstag und Bekanntmachung des Hinweises auf die Patenterteilung: **02.04.1997**
(21) Anmeldenummer: 94100311.3
(22) Anmeldetag: 11.01.1994
(51) Int. Cl.: E02D 29/12, H02G 9/10

(54) **Rohrschacht für eine Rohrgehäusepumpe**
Manhole for a cylindrically-shaped pump
Regard de chaussée pour une pompe à boîtier cylindrique

(30) Priorität: 19.01.1993 DE 4301176
(43) Veröffentlichungstag der Anmeldung: 27.07.1994
(73) Patentinhaber: KSB Aktiengesellschaft, 67227 Frankenthal (DE)
(72) Erfinder: Kraus, Norbert, D-91257 Pegnitz (DE)

(56) Entgegenhaltungen:
- DE-A- 3 423 184
- DE-U- 8 411 983

## Beschreibung

Gegenstand der Erfindung ist ein Rohrschacht zur Aufnahme einer mit einem Elektromotor ausgestatteten Rohrgehäusepumpe, mit einem der Schachtabdeckung dienenden, druckdicht zu verschließenden Deckel und einer druckdichten Durchführung für eine oder mehrere mit dem Elektromotor der Rohrgehäusepumpe verbundene Leitungen.

Der eine Rohrgehäusepumpe aufnehmende Rohrschacht dient mit seinem oberhalb der Pumpe liegenden Teil als Druckleitung der Rohrgehäusepumpe. Dies macht einen druckdichten Abschluß der Öffnungen notwendig, über die zum einen die Pumpe in den Rohrschacht absenkbar ist und über die zum anderen die zum Elektromotor der Rohrgehäusepumpe führenden Leitungen aus dem Rohrschacht herauszuführen sind. Da die Leitungen und ein möglicherweise an der Pumpe verbleibendes Tragseil oder eine Tragkette der Druckströmung der Rohrgehäusepumpe ausgesetzt sind, müssen diese möglichst straff befestigt werden, um Beeinträchtigungen des Betriebes oder Beschädigungen durch Bewegungen zu vermeiden. Da beim Absenken der Rohrgehäusepumpe zunächst auf deren festen Sitz auf einer dafür vorgesehenen Auflage im Rohrschacht zu achten ist, kann das Spannen des Tragseils bzw. der -kette und der Leitungen erst nach dem Absenken vorgenommen werden. Beim Ziehen der Rohrgehäusepumpe müssen dagegen Tragseil oder -kette und Leitungen entspannt und für den folgenden Vorgang vorbereitet werden.

Die genannten Umstände machen eine besondere Gestaltung der zur Durchführung der Pumpe und der Leitungen erforderlichen Öffnungen und der Befestigungsstelle für das Zugseil bzw. die -kette notwendig. Dabei ist zu berücksichtigen, daß wegen der mitunter großen Leistungen der zum Einsatz kommenden Motoren querschnittsstarke Leitungen verwendet werden, die die Handhabung beim Absenken und Heben der Rohrgehäusepumpen erheblich erschweren können. Daher kommt den Leitungsdurchführungen eine besondere Bedeutung zu.

Eine Durchführung der Leitungen durch das Schachtrohr ist zwar möglich; wegen der erforderlichen Biegeradien der Leitungen kann dann aber die Rohrgehäusepumpe nicht ohne vorheriges Abklemmen und Ausfädeln der Leitungen gezogen werden. Hierzu ist wegen der Dicke der Leitungen ein hoher Aufwand notwendig.

Durch das DE-U-84 11 983 ist auch bereits ein Schachtrohr zur Aufnahme von darin angeordneten Tauchmotorpumpen bekannt, bei dem ein zweiteiliger Deckel verwendet wird, wobei nur der eine Teil mit Leitungsdurchführungen versehen ist. Die beiden Deckelsegmente, die unterschiedlich groß sein können, sind untereinander und gegenüber dem Schachtrohr abgedichtet; sie sind unabhängig voneinander vom Schachtrohr lösbar. Hierdurch wird es möglich, daß nach dem Absetzen der Pumpe im Schachtrohr die Verlegung der elektrischen Betriebs- und Steuerleitungen vorgenommen wird, indem nur ein Deckelsegment auf dem Schachtrohr montiert wird und über die verbleibende Öffnung die Leitungen in den für den Betrieb notwendigen Zustand gebracht werden. - Auch diese Lösung ist aber recht aufwendig. Sie erfordert überdies Geschick und Übung des Personals bei der Erstmontage und den turnusmäßigen Wartungsarbeiten.

Der Erfindung liegt die Aufgabe zugrunde, einen Rohrschacht der eingangs genannten Art zu schaffen, dessen Deckel und Leitungsdurchführungen einfach gestaltet sind und einen geringen Aufwand für die Montage und Demontage beim Einsetzen und Ziehen der Rohrgehäusepumpe erfordern.

Diese Aufgabe wird erfindungsgemäß gelöst durch eine am oberen Ende der Schachtwand angeordnete Öffnung, in die der untere, offene Teil eines Rahmens eingefügt ist, während der obere, den Rahmen schließende Teil gesondert zu befestigen ist, wobei in den offenen Teil des Rahmens die Leitungen und die Leitungen umschließende Mittel zur Herstellung eines dichten Abschlusses einsetzbar sind.

Die erfindungsgemäße Lösung erlaubt die Verwendung eines einteiligen, einfach gestalteten Deckels, der keinerlei Probleme für die Abdichtung oder die Montage und Demontage bereitet. Bei abgehobenem Deckel können in den offenen Rahmen ohne großen Aufwand die Leitungen und diese umschließende Mittel eingesetzt werden. Die Demontage erfolgt bei abgehobenem Deckel durch einfaches Herausheben der Leitungen und der diese umschließenden Mittel.

In einer bevorzugten Ausführung der Erfindung wird der den Rahmen schließende Teil durch den Deckel des Rohrschachts selbst gebildet.

Hierzu wird noch ergänzend vorgeschlagen, bei Vorhandensein unhandiger dicker Kabel eine Preßplatte vorzusehen, die unterhalb einer der Abdichtung des Deckels dienenden Flanschdichtung und einer Schlußdichtung des Rahmens anzuordnen ist und die durch eine oder mehrere im Deckel vorgesehene Stellschrauben zu spannen ist.

Auch das im Rohrschacht verbleibende Tragseil oder die Tragkette können bei der erfindungsgemäßen Lösung leicht befestigt und gespannt und vor dem Ziehen der Rohrgehäusepumpe wieder in Benutzung genommen werden.

Hierzu wird in vorteilhafter Ausgestaltung der Erfindung vorgeschlagen, daß in der Wand des Rohrschachts eine Öffnung vorgesehen ist, die in einen außerhalb des Rohrschachts gelegenen, druckdicht verschlossenen Hohlraum führt, in dessen Bereich Mittel zur Befestigung des Tragseils oder der Tragkette der Rohrgehäusepumpe vorgesehen sind. - Mittel zur Befestigung des Tragseils oder der Tragkette können auch in den für die Leitungen und die Dichtmittel vorgesehenen Rahmen eingefügt werden.

Anhand eines Ausführungsbeispiels wird die Erfindung näher erläutert. Es zeigt die
- Fig. 1: einen Rohrschacht mit darin angeordneter Rohrgehäusepumpe, die
- Fig. 2: einen in anderer Ansicht dargestellten vergrößerten Ausschnitt aus der Fig. 1, in welchem der die Leitungsdurchführung enthaltende Rahmen zu sehen ist, und die
- Fig. 3 und 4: als Einzelheit in vergrößerter Darstellung eine Befestigung für das Tragseil der Rohrgehäusepumpe in zwei Ansichten.

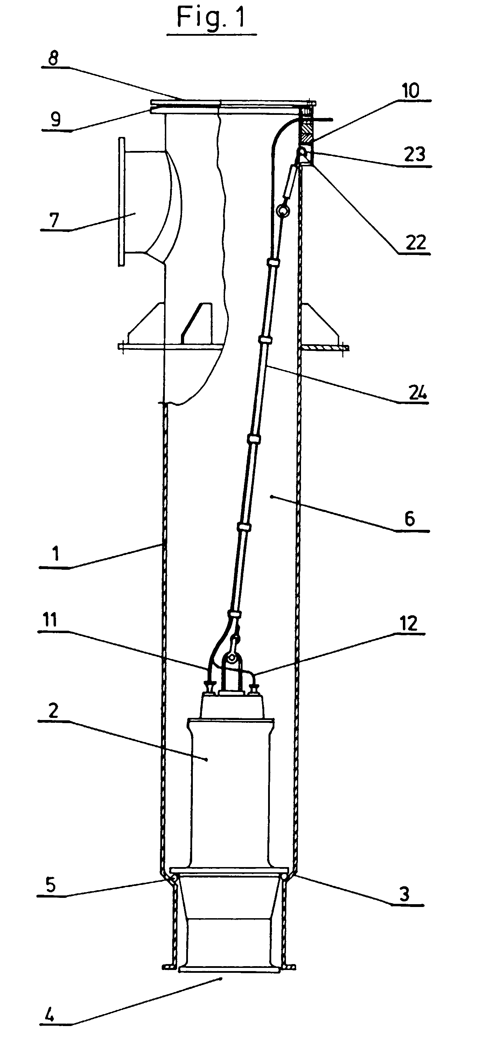

Der in der Fig. 1 dargestellte Rohrschacht (1) nimmt die Rohrgehäusepumpe (2) auf einem dafür vorgesehenen Absatz (3) auf. Unterhalb der Rohrgehäusepumpe (2) befindet sich der Einlauf (4) des Rohrschachtes (1). Der oberhalb der über eine Dichtung (5) gegenüber der Wand des Rohrschachtes (1) abgedichteten Rohrgehäusepumpe (2) gelegene Teil (6) bildet praktisch den Druckstutzen der Rohrgehäusepumpe (2). Von diesem zweigt der seitlich angeordnete Austrittsstutzen (7) des Rohrschachtes (1) ab. Als Verschluß dient ein Deckel (8), der im Zusammenwirken mit einer Flanschdichtung (9) den Rohrschacht (1) druckdicht abschließt.

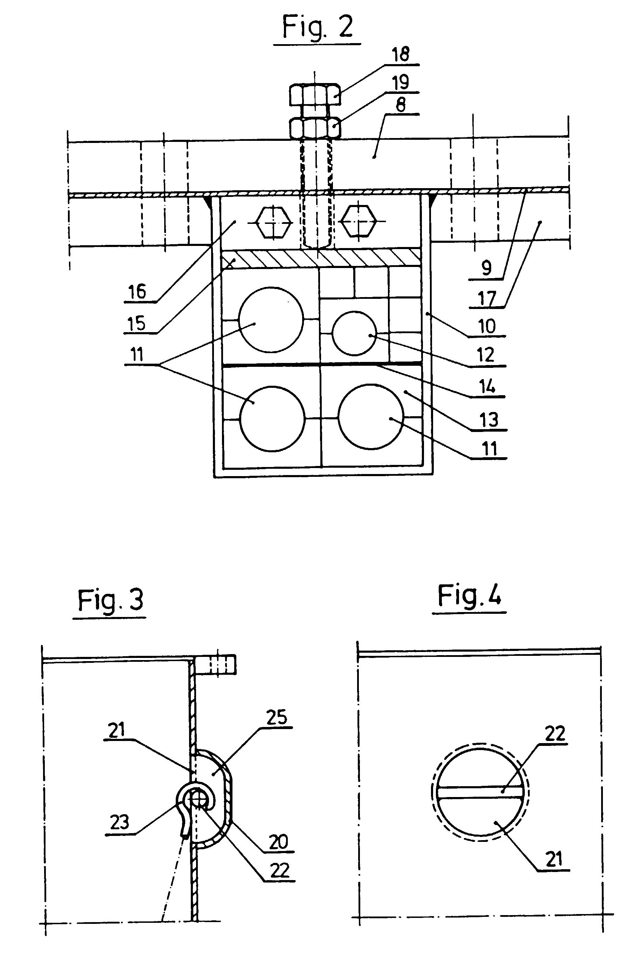

In seinem oberen Teil besitzt der Rohrschacht (1) eine der Durchführung von Leitungen zum Elektromotor der Rohrgehäusepumpe (2) dienende Öffnung, in die ein nach oben offener Rahmen (10) eingeschweißt ist. Die Fig. 2 zeigt diese Einzelheit. In den Rahmen (10) sind die Kraftleitungen (11) und die Steuerleitung (12) der Rohrgehäusepumpe (2) unter Hinzufügung von die Leitungen (11 und 12) umschließenden Dichtmitteln (13), Ankerblechen (14), einer Preßplatte (15) und einer Schlußdichtung (16) eingefügt. Den oberen Abschluß bildet der mit einem Flansch (17) des Rohrschachtes (1) lösbar verbundene Deckel (8).

Zum Spannen der Preßplatte (15) dient eine Stellschraube (18), die über ein Gewinde mit dem Deckel (8) verbunden ist. Zur Sicherung der Stellschraube (18) ist eine Kontermutter (19) vorgesehen. - Bei wenigen und dünnen Kabeln kann auf die aus Preßplatte (15), Stellschraube (18) und Kontermutter (19) bestehende Spannvorrichtung verzichtet werden.

Wie die Fig. 3 und 4 zeigen, ist in der Wand des Rohrschachts (1) eine durch eine Kappe (20) verschlossene Öffnung (21) vorgesehen, die einen Steg (22) freigibt. Die Kappe (20) ist mit der Außenwand des Rohrschachts (1) druckdicht verschweißt, sie bildet einen von der Innenseite des Rohrschachts (1) her zugänglichen Hohlraum (25). Der Steg (22) ist als Aufnahme für einen Spannschloßhaken (23) vorgesehen, welcher mit einem an der Rohrgehäusepumpe (2) befestigten Tragseil (24) verbunden ist. Neben seiner Funktion beim Heben und Absenken der Rohrgehäusepumpe (2) dient das Tragseil (24) auch noch als Führung für die Leitungen (11 und 12), die mit Formstücken und Schellen an ihm befestigt sind.

Die Art der hier für die Leitungsdurchführung verwendeten Abdichtung ist grundsätzlich aus der Elektroinstallation und aus dem Schiff- und Maschinenbau bekannt. Dort werden allerdings nur in oder an eine geschlossene Wandöffnung gesetzte Rahmen verwendet. Die Leitungen müssen also jeweils durch einen solchen Rahmen geführt werden. Dies entspricht grundsätzlich der eingangs geschilderten Art der Leitungsführung durch die Wand des Rohrschachtes. Bei der erfindungsgemäßen Ausführung können aber bei abgenommenem Deckel (8) die Leitungen (11, 12) in einen offenen Rahmen (10) eingelegt und aus diesem herausgenommen werden, was die schwierige und aufwendige Arbeit des Abklemmens und Einfädelns der oftmals dicken und schwer handhabbaren Leitungen (11, 12) überflüssig macht. Die Verbindung einer erst durch den Deckel (8) zu schließenden Öffnung mit einer über den Deckel (8) zu spannenden Preßplatte (15) erlaubt im übrigen eine schnelle, unkomplizierte Behebung eventuell auftretender Undichtigkeiten durch ein Nachspannen der Preßplatte (15), wobei sich ein Entfernen des Deckels (8) und der Schlußdichtung (16) erübrigt.

## Patentansprüche

1. Rohrschacht (1) zur Aufnahme einer mit einem Elektromotor ausgestatteten Rohrgehäusepumpe (2), mit einem der Schachtabdeckung dienenden, druckdicht zu verschließenden Deckel (8) und einer druckdichten Durchführung für eine oder mehrere mit dem Elektromotor der Rohrgehäusepumpe (2) verbundene Leitungen (11, 12), **gekennzeichnet durch** eine am oberen Ende der Schachtwand angeordnete Öffnung, in die der untere, offene Teil eines Rahmens (10) eingefügt ist, während der obere, den Rahmen (10) schließende Teil gesondert zu befestigen ist, wobei in den offenen Teil des Rahmens (10) die Leitungen (11, 12) und die Leitungen (11, 12) umschließende Mittel (13 bis 16) zur Herstellung eines dichten Abschlusses einsetzbar sind.

2. Rohrschacht nach Anspruch 1, dadurch gekennzeichnet, daß der den Rahmen (10) schließende Teil durch den Deckel (8) gebildet wird.

3. Rohrschacht nach Anspruch 2, gekennzeichnet durch eine Preßplatte (15), die unterhalb einer der Abdichtung des Deckels (8) dienenden Flanschdichtung (9) und einer Schlußdichtung (16) des Rahmens (10) angeordnet ist, und eine oder mehrere im Deckel (8) vorgesehene Stellschrauben (18) zum Spannen der Preßplatte (15).

4. Rohrschacht nach Anspruch 1, dadurch gekennzeichnet, daß in der Wand des Rohrschachts (1) eine Öffnung (21) vorgesehen ist, die in einen außerhalb des Rohrschachts (1) gelegenen, druckdicht verschlossenen Hohlraum (25) führt, in dessen Bereich Mittel (22) zur Befestigung des Tragseils (24) oder der Tragkette der Rohrgehäusepumpe (2) vorgesehen sind.

5. Rohrschacht nach Anspruch 4, dadurch gekennzeichnet, daß ein innerhalb der Öffnung (21) belassener Steg (22) in der Wand des Rohrschachts (1) als Befestigungsmittel für das Tragseil (24) oder die Tragkette dient.

6. Rohrgehäusepumpe nach Anspruch 1, dadurch gekennzeichnet, daß Mittel zur Befestigung des Tragseils (24) oder der Tragkette in den Rahmen (10) eingefügt sind.

## Claims

1. Tubular shaft (1) for receiving a tubular-housing pump (2) fitted with an electric motor, having a lid (8) which serves for covering the shaft and is to be closed in a pressure-tight manner, and having a pressure-tight passage for one or more lines (11, 12) connected to the electric motor of the tubular-housing pump (2), characterized by an opening which is arranged at the upper end of the shaft wall and into which the lower, open part of a frame (10) is inserted, but as the upper part, closing the frame (10), is to be attached separately, it being possible for the lines (11, 12) and means (13 to 16) enclosing the lines (11, 12) to be inserted into the open part of the frame (10) to produce a tight closure.

2. Tubular shaft according to Claim 1, characterized in that the part closing the frame (10) is formed by the lid (8).

3. Tubular shaft according to Claim 2, characterized by a pressure plate (15), which is arranged underneath a flange seal (9), serving for sealing the lid (8), and an end seal (16) of the frame (10), and by one or more adjusting screws (18), provided in the lid (8), for tightening the pressure plate (15).

4. Tubular shaft according to Claim 1, characterized in that in the wall of the tubular shaft (1) there is provided an opening (21), which leads into a pressure-tight cavity (25) which is situated outside the tubular shaft (1) and in the region of which means (22) for attaching the carrying wire (24) or the carrying chain of the tubular-housing pump (2) are provided.

5. Tubular shaft according to Claim 4, characterized in that a cross-piece (22) left within the opening (21) in the wall of the tubular shaft (1) serves as an attachment means for the carrying wire (24) or the carrying chain.

6. Tubular-housing pump according to Claim 1, characterized in that means for attaching the carrying wire (24) or the carrying chain are inserted into the frame (10).

## Revendications

1. Puits (1) pour tuyauterie destiné à la réception d'une pompe (2) à corps tubulaire équipée d'un moteur électrique, comportant un couvercle (8) servant à recouvrir le puits, à fermer de manière étanche la pression et un passage, étanche à la pression, pour une ou plusieurs conduites (11, 12) communiquant avec le moteur électrique de la pompe (2) à corps tubulaire, **caractérisé par** une ouverture, qui est prévue à l'extrémité supérieure de la paroi du puits et dans laquelle est insérée la partie inférieure ouverte d'un cadre (10), tandis que la partie supérieure fermant le cadre (10) peut être fixée séparément, les conduites (11, 12) et des moyens (13 à 16) entourant les conduits (11, 12) pouvant être insérés dans la partie ouverte du cadre (10) pour établir une fermeture étanche.

2. Puits pour tuyauterie suivant la revendication 1, caractérisé en ce que la partie fermant le cadre (10) est formée par le couvercle (8).

3. Puits pour tuyauterie suivant la revendication 2, caractérisé par une plaque (15) de serrage, qui est montée en-dessous d'une garniture (9) d'étanchéité de bride servant à rendre étanche le couvercle (8) et d'une garniture (16) d'étanchéité de fermeture du cadre (10) et par une ou plusieurs vis (18) de serrage prévue dans le couvercle (8) et destinée à serrer la plaque (15) de serrage.

4. Puits pour tuyauterie suivant la revendication 1, caractérisé en ce qu'il est prévu dans la paroi du puits (1) pour tuyauterie une ouverture (21), qui mène à un espace creux (25) se trouvant à l'extérieur du puits (1) pour tuyauterie et clos de manière étanche à la pression, dans la zone duquel sont prévus des moyens (22) de fixation du câble (24) porteur ou de la chaîne porteuse de la pompe (2) à corps tubulaire.

5. Puits pour tuyauterie suivant la revendication 4, caractérisé en ce qu'une barrette (22) laissée dans l'ouverture (21) sert de moyen de fixation au câble (24) porteur ou à la chaîne porteuse dans la paroi du puits (1) pour tuyauterie.

6. Pompe à corps tubulaire suivant la revendication 1, caractérisée en ce que des moyens de fixation du câble (24) porteur ou de la chaîne porteuse sont insérés dans le cadre (10).
